# EUROPEAN PATENT APPLICATION

(11) **EP 4 765 584 A1**
(43) Date of publication of application: **24.06.2026**
(21) Application number: 25222988.5
(22) Date of filing: 12.12.2025
(51) Int. Cl.: H02K 1/18, H02K 1/20

(54) **ROTATING ELECTRICAL MACHINE**

(30) Priority: 20.12.2024 JP 2024225201; 22.10.2025 JP 2025177494
(71) Applicant: AISIN CORPORATION, Aichi 448-8650 (JP)
(72) Inventor: DEGUCHI, Shota, Kariya, 448-8650 (JP)
(74) Representative: Kramer Barske Schmidtchen Patentanwälte PartG mbB

(57) **Abstract**

A rotating electrical machine includes: a housing including a fixing portion (60) including a threaded hole (61) and a fixing-portion-side refrigerant passage (62); and a stator (1) fixed to the fixing portion (60) and including a stator core (100) in which a bolt insertion hole (14, 24, 34) is formed, and a bolt (50) configured to fix a contact portion (37) including an opening of the bolt insertion hole (14, 24, 34) in surface contact with the fixing portion (60) by being inserted into the bolt insertion hole (14, 24, 34) to insert its distal end into the threaded hole (61), wherein a supply port corresponding to an opening of the fixing-portion-side refrigerant passage (62) is formed in the contact portion (37) within a distribution range of a surface pressure, and a stator-side refrigerant passage (36) axially extending from the supply port is formed in the stator core (100).

## Description

### TECHNICAL FIELD

The present disclosure relates to a rotating electrical machine.

### BACKGROUND DISCUSSION

A conventional stator is used in a state of being fixed to a fixing portion of a housing or the like. Fixing with a bolt is known as a configuration for fixing the stator to the fixing portion. For example, in CN 117791939 A, protrusions for fixing a bolt that protrude radially outward are formed at three locations on a radially outer surface of a stator core. In this configuration, a protrusion for a refrigerant flow passage that protrudes radially outward is formed at one location different from these protrusions. A refrigerant having passed through a refrigerant passage of a fixing portion is supplied to a stator through the protrusion for a refrigerant flow passage.

In the above-described conventional technique, the protrusions for fixing a bolt and the protrusion for a refrigerant flow passage are formed at different positions. Therefore, when the stator is fastened to the fixing portion by a bolt, a surface pressure acting between the protrusions for fixing a bolt and the fixing portion does not act on the protrusion for a refrigerant flow passage. This makes it impossible to seal between the stator and the protrusion for a refrigerant flow passage by an axial force of the bolt, and it is necessary to use another member, for example, a sealing member.

A need thus exists for a rotating electrical machine that is capable of sealing between a stator and a fixing portion with a simple configuration.

### SUMMARY

A stator according to one embodiment is a stator having a ring shape and fixed to a fixing portion in which a threaded hole and a fixing-portion-side refrigerant passage that is a refrigerant flow passage are formed, the stator including a stator core in which a bolt insertion hole is formed that axially passes through the stator, and a bolt configured to fix a contact portion including an opening of the bolt insertion hole on the fixing portion side in surface contact with the fixing portion by being inserted into the bolt insertion hole to insert a distal end of the bolt into the threaded hole, wherein a supply port corresponding to an opening of the fixing-portion-side refrigerant passage is formed in the contact portion within a distribution range of a surface pressure generated by fastening the bolt, and a stator-side refrigerant passage that is a refrigerant flow passage axially extending from the supply port is formed in the stator core.

That is, in the stator, a refrigerant is supplied from the fixing-portion-side refrigerant passage formed in the fixing portion to the stator-side refrigerant passage through the supply port. Thus, the refrigerant may leak at the contact portion where the fixing portion and the stator are in contact with each other. To solve the problem, a configuration is adopted in which the supply port is provided in the distribution range of the surface pressure generated by fastening the bolt, and the surface pressure generated by fastening the bolt acts on the supply port to seal between the supply port and the fixing-portion-side refrigerant passage. With this configuration, the possibility of occurrence of leakage at the contact portion can be reduced by fastening the bolt, which makes it possible to seal between the stator and the fixing portion with a simple configuration.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view of a stator core;
Fig. 2 is an exploded perspective view of the stator core;
Fig. 3 is a drawing illustrating a state in which a first core is viewed along an axial direction;
Fig. 4 is a drawing illustrating a state in which a second core is viewed along the axial direction;
Fig. 5 is a drawing illustrating a state in which a first circumferential refrigerant passage is superimposed on the second core as viewed along the axial direction;
Fig. 6 is a drawing illustrating a state in which a third core is viewed along the axial direction;
Fig. 7 is a drawing illustrating a state in which the first circumferential refrigerant passage is superimposed on the third core as viewed along the axial direction;
Fig. 8 is a perspective view illustrating only a refrigerant passage extracted;
Fig. 9 is a drawing illustrating the stator core with a bolt inserted therein;
Fig. 10 is a cross-sectional view of the stator core and a fixing portion;
Fig. 11 is a drawing illustrating a distribution of a surface pressure generated by the bolt;
Fig. 12 is a drawing illustrating a state in which a first core is viewed along the axial direction;
Fig. 13 is a cross-sectional view of a stator core and a fixing portion; and
Fig. 14 is a drawing illustrating a state in which a third core is viewed along the axial direction.

### DETAILED DESCRIPTION

Here, embodiments of the present disclosure will be described in the following order.
(1) Configuration of Stator Core:
   (1-1) Configuration of First Core:
   (1-2) Configuration of Second Core:
   (1-3) Configuration of Third Core:
   (1-4) Connection to Fixing Portion:
(2) Other Embodiments etc.:

### Configuration of Stator Core:

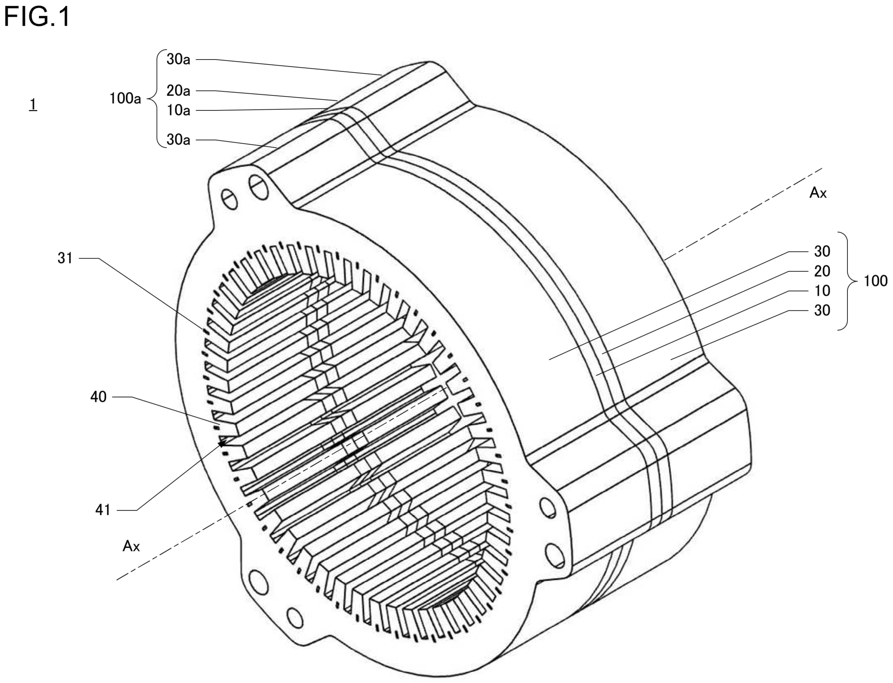

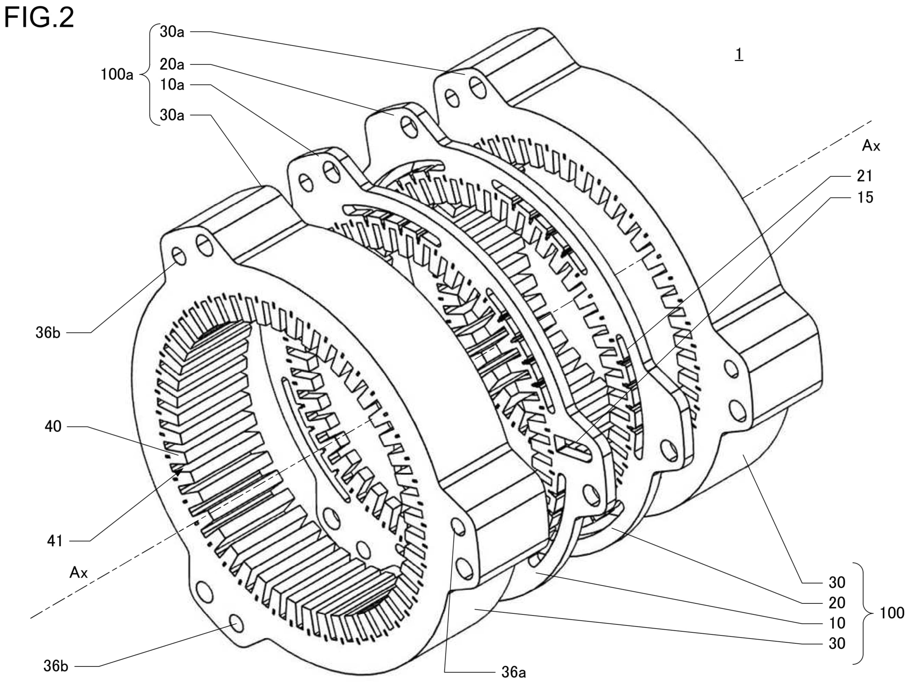

Fig. 1 is a perspective view of a stator core 100 constituting a stator 1 according to the present embodiment, and Fig. 2 is an exploded perspective view of the stator core 100. The stator core 100 is a ring-shaped member, and in Figs. 1 and 2, an alternate long and short dash line indicates a central axis Ax of a ring formed by the stator core 100. Fig. 2 illustrates the stator core 100 disassembled in the direction of the central axis Ax.

A rotor (not illustrated) is disposed inside the ring formed by the stator core 100. The rotor is a member that rotates about the central axis Ax of the ring formed by the stator core 100 as the rotation axis. In the present specification, a direction parallel to the central axis Ax is referred to as an axial direction, a direction perpendicular to the central axis Ax is referred to as a radial direction, and a rotation direction about the central axis Ax is referred to as a circumferential direction. In the radial direction, a direction away from the central axis Ax is referred to as a radial outer side, and a direction toward the central axis Ax is referred to as a radial inner side.

The stator core 100 includes a plurality of teeth 40 arranged in the circumferential direction and a plurality of slots 41 each formed between the adjacent teeth 40 in the circumferential direction. In the present embodiment, the teeth 40 are portions protruding radially inward from a radially inner surface of the stator core 100. The teeth 40 are formed at regular intervals in the circumferential direction on the entire inner circumference of the stator core 100. The number of teeth 40 may be any number. In the present embodiment, the cross-sectional shape of the teeth 40 in the direction perpendicular to the axial direction is the same at any position in the axial direction. Therefore, the teeth 40 are portions protruding radially inward from the radially outer side and axially extending in a state where the cross-sectional shape in the direction perpendicular to the axial direction is the same.

A space formed between the teeth 40 in the circumferential direction is the slot 41. A coil (not illustrated) is disposed in the slot 41.

In the present embodiment, the stator core 100 includes a first core 10, a second core 20, and third cores 30. The first core 10 and the second core 20 are provided in a central portion in the axial direction, and in the present embodiment, a boundary line between the first core 10 and the second core 20 is located at the center in the axial direction. The first core 10 and the second core 20 are sandwiched between the third cores 30. That is, the first core 10 and the second core 20 are in contact with each other on one surface perpendicular to the axial direction, and are in contact with the third cores 30 on the other surface.

In the present embodiment, the stator core 100 includes protrusions 100a that protrude radially outward from a radially outer surface of the ring-shaped portion. In the present embodiment, the protrusions 100a are formed at three locations of the stator core 100, with equal circumferential distances to each other. That is, the protrusions 100a are disposed at positions where rotation angles about the central axis Ax are separated by 120° from each other.

Each of the protrusions 100a has a substantially trapezoidal shape as viewed along the axial direction with a circumferential distance on the radially inner side longer than a circumferential distance on the radially outer side. In the present embodiment, protrusions 10a, 20a, and 30a having the same outer peripheral shape on the radially outer side are formed in all of the first core 10, the second core 20, and the third cores 30, respectively. That is, the protrusions 10a, 20a, and 30a are circumferentially aligned with each other to constitute the protrusion 100a.

The protrusions 10a, 20a, and 30a have the same outer peripheral shape, but have different structures inside the outer periphery from each other. The stator core 100 is used by being fixed to a fixing portion described later. A fixing-portion-side refrigerant passage described later is formed in the fixing portion, and the stator core 100 is cooled by a refrigerant supplied from the fixing-portion-side refrigerant passage. Hereinafter, each of the first core 10, the second core 20, and the third cores 30 will be described in detail.

### Configuration of First Core:

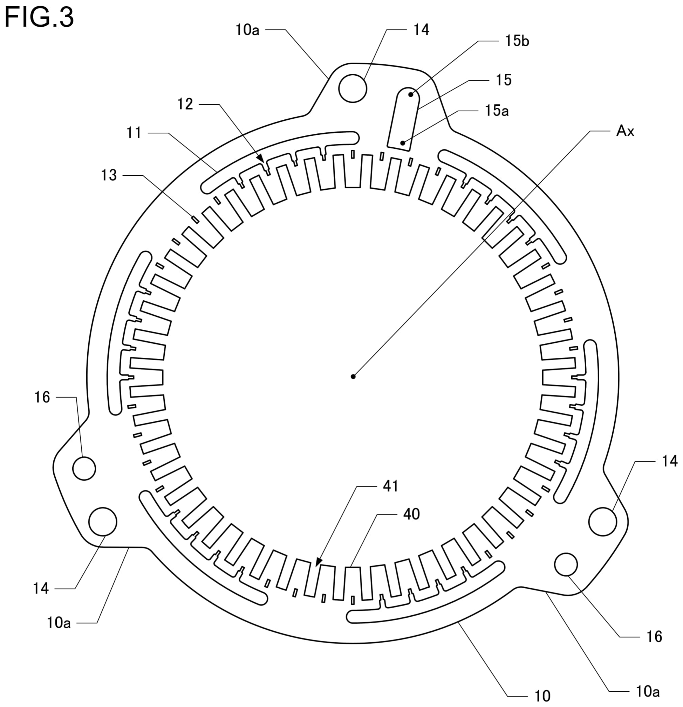

Next, the configuration of the first core 10 will be described. In the present embodiment, the first core 10 is formed by laminating electromagnetic steel sheets having a constant thickness. Fig. 3 is a drawing illustrating the electromagnetic steel sheets constituting the first core 10 as viewed along the direction parallel to the central axis Ax. The first core 10 includes a refrigerant passage that causes the refrigerant to flow in the axial direction and a refrigerant passage that causes the refrigerant to flow in the circumferential direction. In the present embodiment, the first core 10 includes a plurality of first circumferential refrigerant passages 11 formed at regular intervals in the circumferential direction. Each of the first circumferential refrigerant passages 11 is a refrigerant flow passage circumferentially extending with a substantially constant radial length.

In the first core 10, the plurality of first circumferential refrigerant passages 11 are formed at positions on the radially outer side of the teeth 40. The first circumferential refrigerant passages 11 illustrated in Fig. 3 are formed at six locations in the first core 10. In the present embodiment, the sum of the circumferential lengths of the plurality of first circumferential refrigerant passages 11 is longer than half of the entire circumferential length. Furthermore, the first circumferential refrigerant passages 11 axially pass through the first core 10.

In the present embodiment, a plurality of axial refrigerant passages 13 are formed in the first core 10 at positions on the radially outer side of the teeth 40. Specifically, substantially rectangular holes whose long side is in the radial direction and whose short side is in the circumferential direction are formed at positions on the radially outer side of the teeth 40 and on the radially inner side of the first circumferential refrigerant passages 11, thereby forming the axial refrigerant passages 13. Each of the axial refrigerant passages 13 is a substantially rectangular hole and has the same shape at any position in the axial direction. That is, the axial refrigerant passage 13 is a refrigerant passage extending in the axial direction and having the same cross-sectional shape. The axial refrigerant passage 13 is connected to an axial refrigerant passage 31 of the third core 30 described later.

In the present embodiment, a plurality of connecting portions 12 are formed on a radially inner wall surface of each of the first circumferential refrigerant passages 11. The connecting portions 12 are holes extending in the radial direction, and four connecting portions are formed for one first circumferential refrigerant passage 11. In the present embodiment, each of the connecting portions 12 is a portion that gradually narrows toward the radially inner side, is connected to the first circumferential refrigerant passage 11 on the radially outer side, and is connected to the axial refrigerant passage 31 of the third core 30 described later on the radially inner side. That is, a radially inner portion of the connecting portion 12 has a shape aligned with the axial refrigerant passage 31 as viewed along the axial direction.

A bolt insertion hole 14 is formed in each of the protrusions 10a. The bolt insertion hole 14 constitutes a part of a bolt insertion hole axially passing through the stator 1. The bolt insertion hole 14 is a circular hole and passes through the first core 10. Thread grooves may or may not be formed in the bolt insertion hole 14.

A radial refrigerant passage 15, which is a radially-extending refrigerant flow passage, is formed in one of the protrusions 10a. The radial refrigerant passage 15 is a hole formed to reach a ring-shaped portion of the first core 10 from the protrusion 10a on the radially outer side of the teeth 40 and the axial refrigerant passages 13.

The radial refrigerant passage 15 has a shape obtained by combining a rectangle and a circle as viewed along the direction parallel to the central axis Ax. Specifically, the radial refrigerant passage 15 is formed by a rectangular hole whose short side is substantially parallel to the circumferential direction and whose long side is substantially parallel to the radial direction on the radially inner side, and a semicircular hole on the radially outer side of the rectangle. The radial refrigerant passage 15 is a hole axially passing through the first core 10.

A radially inner portion 15a of the radial refrigerant passage 15 is present between the first circumferential refrigerant passages 11 in the circumferential direction. The portion between the first circumferential refrigerant passages 11 is a portion where a second circumferential refrigerant passage 21 formed in the second core 20 described later is present. Therefore, in a case where the first core 10 and the second core 20 are in contact with each other, the portion 15a of the radial refrigerant passage 15 is connected to the second circumferential refrigerant passage 21. That is, the radial refrigerant passage 15 is connected to a circumferential refrigerant passage formed in the stator core 100.

A radially outer portion 15b of the radial refrigerant passage 15 is formed at a position corresponding to a stator-side refrigerant passage 36 described later. Therefore, in a case where the first core 10 and the third core 30 are in contact with each other, the radial refrigerant passage 15 is connected to the stator-side refrigerant passage 36 formed in the third core 30 constituting the stator core 100 on the radially outer side.

In the present embodiment, the radial refrigerant passage 15 is formed in one of the three protrusions 10a, and the radial refrigerant passage 15 is not formed in the other two protrusions 10a. In the other two protrusions 10a, circular holes 16 are formed at positions corresponding to the stator-side refrigerant passages 36. Each of the holes 16 does not extend radially inward and does not reach a portion between the first circumferential refrigerant passages 11 in the circumferential direction. Therefore, the hole 16 is not connected to the second circumferential refrigerant passage 21.

As described above, among the radial refrigerant passage 15 and the two holes 16 formed in the three protrusions 10a, only the radial refrigerant passage 15 is connected to the stator-side refrigerant passage 36 and the second circumferential refrigerant passage 21 in the first core 10 according to the present embodiment. The two holes 16 are connected to the stator-side refrigerant passages 36 but are not connected to the second circumferential refrigerant passages 21. There is no structure like the radial refrigerant passage 15 in the second core 20 and the third core 30 described later. Therefore, in the present embodiment, the radial refrigerant passage 15 is connected to the stator-side refrigerant passage 36 and the second circumferential refrigerant passage 21 at one location of the stator core 100.

### (1-2) Configuration of Second Core:

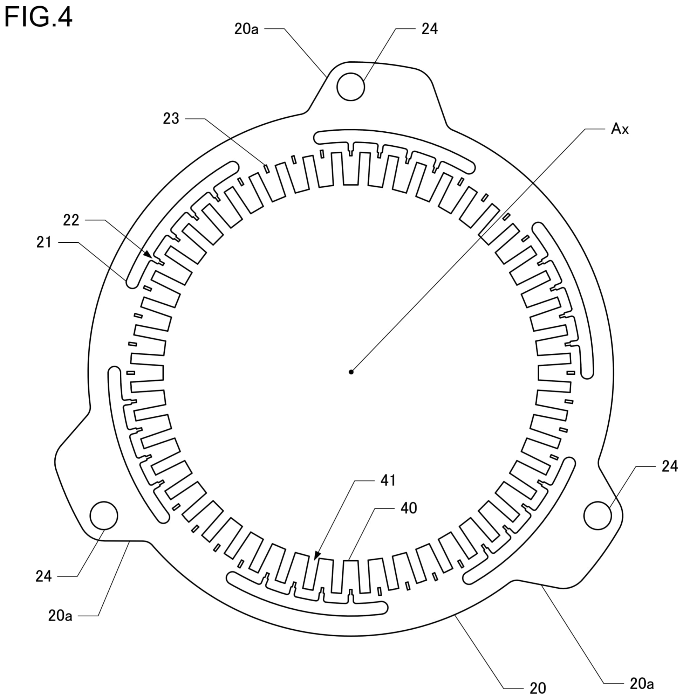

Next, the configuration of the second core 20 will be described. In the present embodiment, the second core 20 is formed by laminating electromagnetic steel sheets having a constant thickness. Fig. 4 is a drawing illustrating the electromagnetic steel sheets constituting the second core 20 as viewed along the direction parallel to the central axis Ax. The second core 20 includes a refrigerant passage that causes the refrigerant to flow in the axial direction and a refrigerant passage that causes the refrigerant to flow in the circumferential direction. In the present embodiment, the second core 20 includes a plurality of the second circumferential refrigerant passages 21 formed at regular intervals in the circumferential direction. Each of the second circumferential refrigerant passages 21 is a refrigerant flow passage circumferentially extending with a substantially constant radial length.

In the second core 20, the plurality of second circumferential refrigerant passages 21 are formed at positions on the radially outer side of the teeth 40. The second circumferential refrigerant passages 21 illustrated in Fig. 4 are formed at six locations in the second core 20. In the present embodiment, the sum of the circumferential lengths of the plurality of second circumferential refrigerant passages 21 is longer than half of the entire circumferential length. Furthermore, the second circumferential refrigerant passages 21 axially pass through the second core 20.

In the present embodiment, the circumferential length of each of the first circumferential refrigerant passages 11 is equal to the circumferential length of each of the second circumferential refrigerant passages 21. The circumferential position of each of the first circumferential refrigerant passages 11 is set such that the respective opposite ends of the first circumferential refrigerant passage 11 circumferentially overlap the adjacent second circumferential refrigerant passages 21 when the first core 10 and the second core 20 are brought into contact with each other.

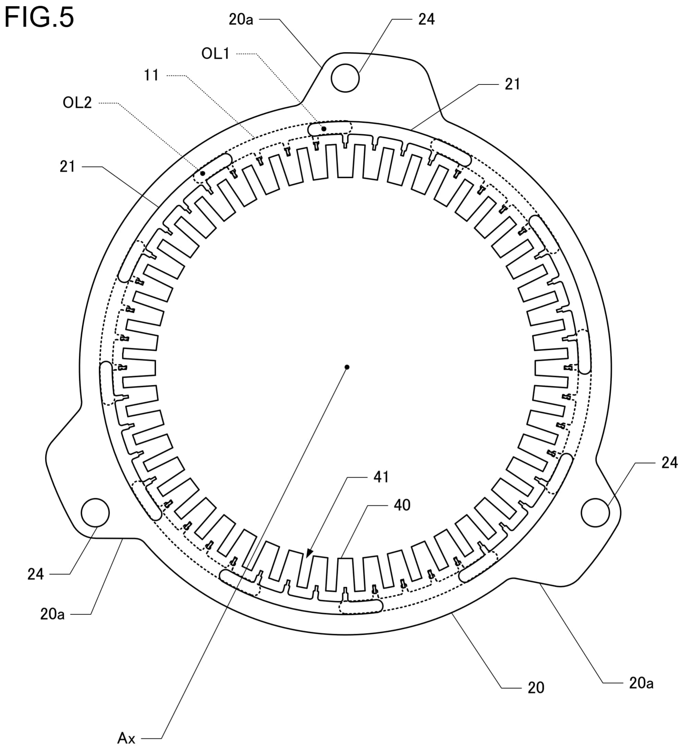

Fig. 5 is a drawing illustrating a state in which the first circumferential refrigerant passages 11 and the second circumferential refrigerant passages 21 overlap with each other, and a solid line indicates the second core 20. In Fig. 5, a broken line indicates the positions of the first circumferential refrigerant passages 11. That is, the broken line indicates the positions of the first circumferential refrigerant passages 11 when the first core 10 and the second core 20 are brought into contact with each other. As illustrated in Fig. 5, the first circumferential refrigerant passage 11 overlaps the second circumferential refrigerant passage 21 in a region OL1 at one circumferential end. The first circumferential refrigerant passage 11 overlaps the second circumferential refrigerant passage 21 in a region OL2 at the other circumferential end. With the above configuration, a series of refrigerant passages is formed in which the first circumferential refrigerant passages 11 and the second circumferential refrigerant passages 21 are alternately continuous in the circumferential direction and are connected over the entire circumference.

In the present embodiment, a plurality of axial refrigerant passages 23 are formed in the second core 20 at positions on the radially outer side of the teeth 40 (see Fig. 4). Specifically, substantially rectangular holes whose long side is in the radial direction and whose short side is in the circumferential direction are formed at positions on the radially outer side of the teeth 40 and on the radially inner side of the second circumferential refrigerant passages 21, thereby forming the axial refrigerant passages 23. Each of the axial refrigerant passages 23 is a substantially rectangular hole and has the same shape at any position in the axial direction. That is, the axial refrigerant passage 23 is a refrigerant passage extending in the axial direction and having the same cross-sectional shape. The axial refrigerant passage 23 is connected to the axial refrigerant passage 31 of the third core 30 described later.

In the present embodiment, a plurality of connecting portions 22 are formed on a radially inner wall surface of each of the second circumferential refrigerant passages 21. The connecting portions 22 are holes extending in the radial direction, and four connecting portions are formed for one second circumferential refrigerant passage 21. In the present embodiment, each of the connecting portions 22 is a portion that gradually narrows toward the radially inner side, is connected to the second circumferential refrigerant passage 21 on the radially outer side, and is connected to the axial refrigerant passage 31 of the third core 30 described later on the radially inner side. That is, a radially inner portion of the connecting portion 22 has a shape aligned with the axial refrigerant passage 31 as viewed along the axial direction.

A bolt insertion hole 24 is formed in each of the protrusions 20a. The bolt insertion hole 24 constitutes a part of the bolt insertion hole axially passing through the stator 1. The bolt insertion hole 24 is a circular hole and passes through the second core 20. Thread grooves may or may not be formed in the bolt insertion hole 24. No refrigerant flow passage in the radial direction like the radial refrigerant passage 15 formed in the first core 10 is formed in the protrusions 20a of the second core 20. That is, no radial refrigerant passage or no hole is formed in a portion adjacent to the bolt insertion hole 24 in a clockwise direction of the circumferential direction in Fig. 4.

### (1-3) Configuration of Third Core:

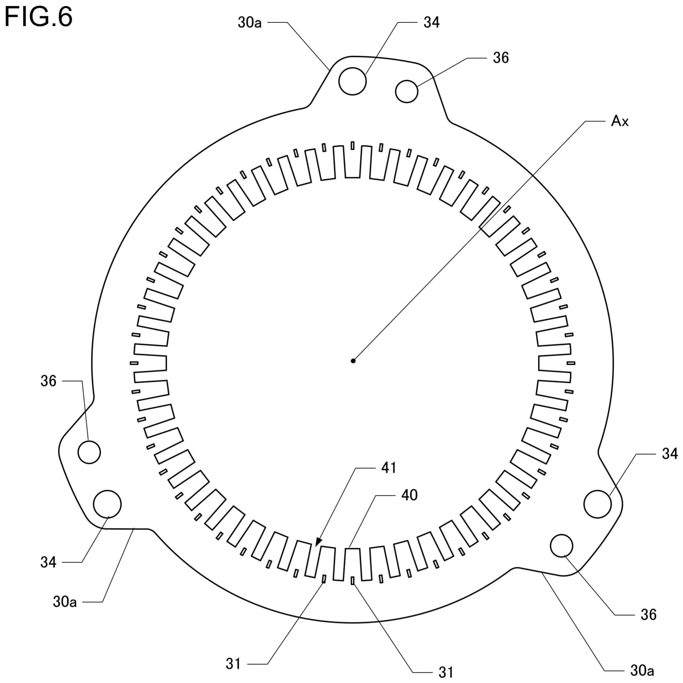

Next, the configuration of the third core 30 will be described. In the present embodiment, the third core 30 is formed by laminating electromagnetic steel sheets having a constant thickness. Fig. 6 is a drawing illustrating the electromagnetic steel sheets constituting the third core 30 as viewed along the direction parallel to the central axis Ax. A bolt insertion hole 34 is formed in each of the protrusions 30a. The bolt insertion hole 34 constitutes a part of the bolt insertion hole axially passing through the stator 1. The bolt insertion hole 34 is a circular hole and passes through the third core 30. Thread grooves may or may not be formed in the bolt insertion hole 34.

The stator-side refrigerant passage 36, which is an axially-extending refrigerant flow passage, is formed in each of the protrusions 30a. In the present embodiment, the stator-side refrigerant passages 36 are formed in all the three protrusions 30a. An opening that opens at an end opposite to the first core 10 in the axial direction serves as a supply port of the refrigerant. One of the stator-side refrigerant passages 36 serves as the refrigerant flow passage with the supply port connected to the fixing-portion-side refrigerant passage of the fixing portion described later, and the refrigerant supplied from the fixing-portion-side refrigerant passage.

Among the stator-side refrigerant passages 36 formed in the three protrusions 30a, the stator-side refrigerant passages 36 to which the fixing-portion-side refrigerant passage is not connected do not serve as the refrigerant flow passage. In the present embodiment, the radial refrigerant passage 15 is formed in one of the protrusions 10a of the first core 10, and the holes 16, instead of the radial refrigerant passage 15, are formed in the other two protrusions 10a. Furthermore, in the protrusions 20a of the second core 20, no hole is formed at the positions corresponding to the stator-side refrigerant passages 36 and the holes 16. Therefore, among the stator-side refrigerant passages 36, a stator-side refrigerant passage 36a (see Fig. 2) corresponding to the position where the radial refrigerant passage 15 is formed is connected to the second circumferential refrigerant passage 21 through the radial refrigerant passage 15. On the other hand, stator-side refrigerant passages 36b corresponding to the positions where the radial refrigerant passage 15 is not formed are not connected to the second circumferential refrigerant passages 21 nor the first circumferential refrigerant passages 11.

Since the above configuration is adopted, the supply port of the stator-side refrigerant passage 36a corresponding to the position where the radial refrigerant passage 15 is formed among the stator-side refrigerant passages 36 is connected to the fixing-portion-side refrigerant passage of the fixing portion in the present embodiment. As described above, in the present embodiment, the stator-side refrigerant passages 36 are formed in all the three protrusions 30a, and only one of them is used. Because the stator-side refrigerant passages 36 are formed in all the three protrusions 30a, the third core 30 can be used at any rotational position obtained by rotating the third core 30 by 120° about the central axis Ax.

Furthermore, a plurality of the axial refrigerant passages 31 are formed in the third core 30 at positions on the radially outer side of the teeth 40. Specifically, substantially rectangular holes whose long side is in the radial direction and whose short side is in the circumferential direction are formed at positions on the radially outer side of the teeth 40 and on the radially inner side of the first circumferential refrigerant passages 11 and the second circumferential refrigerant passages 21, thereby forming the axial refrigerant passages 31.

Each of the axial refrigerant passages 31 is a substantially rectangular hole and has the same shape at any position in the axial direction. That is, the axial refrigerant passage 31 is a refrigerant passage extending in the axial direction and having the same cross-sectional shape. In the present embodiment, the axial refrigerant passage 31 is formed at a position corresponding to each of the teeth 40. Therefore, the number of axial refrigerant passages 31 provided in the circumferential direction is the same as the number of teeth 40. With this configuration, each of the teeth 40 can be cooled by the refrigerant flowing inside the corresponding axial refrigerant passage 31.

Some of the axial refrigerant passages 31 have the same radial and circumferential positions as the axial refrigerant passages 13 formed in the first core 10 and the axial refrigerant passages 23 formed in the second core 20. The others of the axial refrigerant passages 31 have the same radial and circumferential positions as the radially inner portions of the connecting portions 12 formed in the first core 10 and the radially inner portions of the connecting portions 22 formed in the second core 20. Therefore, an extension line of each of the axial refrigerant passages 31 forms a hole axially passing through the stator core 100.

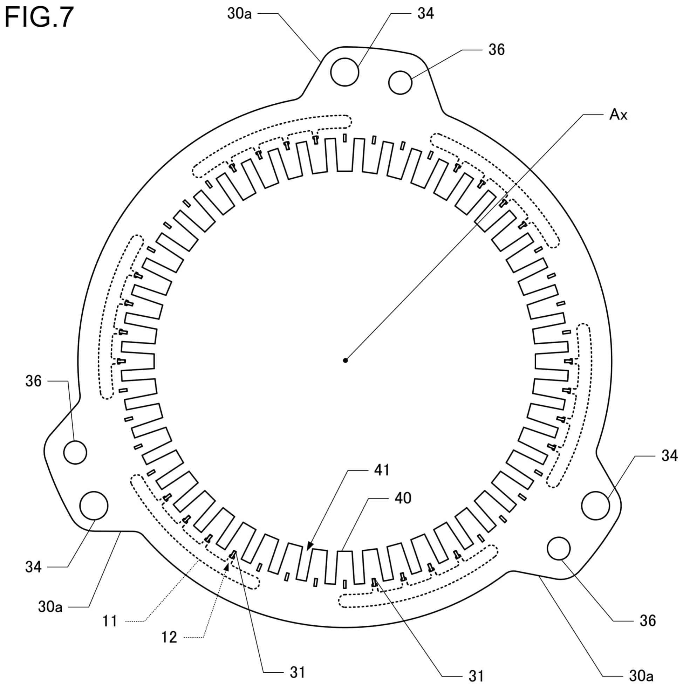

Fig. 7 is a drawing illustrating a state in which the first circumferential refrigerant passages 11 are superimposed on the third core 30 illustrated in Fig. 6. As illustrated in Fig. 7, the axial refrigerant passages 31 are axially connected to the connecting portions 12 of the first core 10. Therefore, the refrigerant flowing through the first circumferential refrigerant passages 11 passes through the axial refrigerant passages 31 to flow in the axial direction. As illustrated in Fig. 1, the axial refrigerant passages 31 open at their axial ends. Therefore, the refrigerant passing through the axial refrigerant passages 31 and reaching the openings is discharged from the openings. Similarly, the axial refrigerant passages 31 are axially connected to the connecting portions 22 of the second core 20.

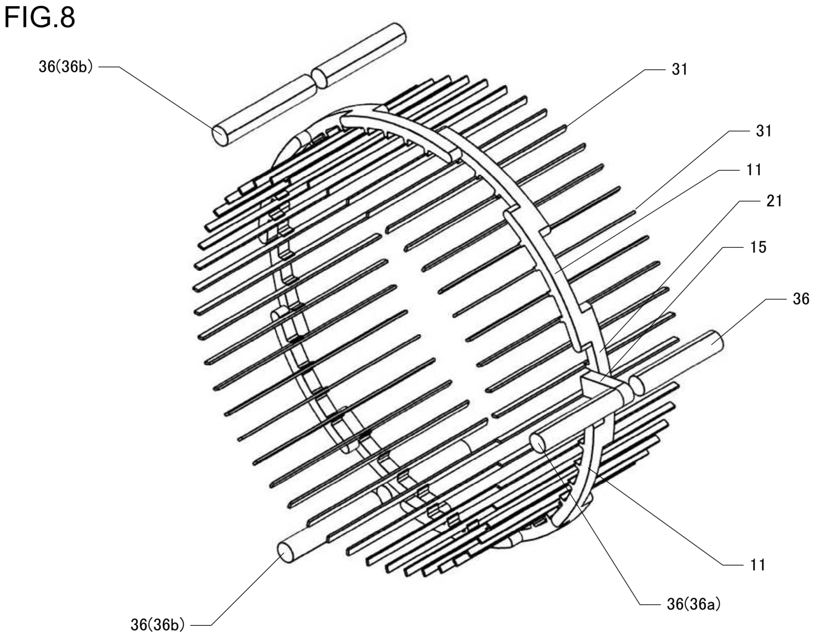

With the above configuration, a refrigerant passage extending from the supply port to the discharge port is formed. Fig. 8 illustrates the shape of a space serving as the refrigerant passage. Specifically, in the stator-side refrigerant passage 36a corresponding to the position where the radial refrigerant passage 15 is formed, the opening opposite to the radial refrigerant passage 15 serves as the supply port of the refrigerant, and the radial refrigerant passage 15 is connected to the stator-side refrigerant passage 36a connected to the supply port at the axial central portion of the stator core 100. The second circumferential refrigerant passage 21 is connected to the radial refrigerant passage 15, and the first circumferential refrigerant passages 11 are connected to the opposite circumferential ends of the second circumferential refrigerant passage 21. The second circumferential refrigerant passages 21 are connected to the opposite circumferential ends of each of the first circumferential refrigerant passages 11, and the first circumferential refrigerant passages 11 are connected to the opposite circumferential ends of each of the second circumferential refrigerant passages 21. Furthermore, the plurality of axial refrigerant passages 31 are connected to each of the first circumferential refrigerant passages 11 and the second circumferential refrigerant passages 21.

With the above configuration, it can be understood that the refrigerant supplied from the supply port axially flows through the stator-side refrigerant passage 36a, radially flows through the radial refrigerant passage 15, further flows in the circumferentially-extending refrigerant passage formed by the first circumferential refrigerant passages 11 and the second circumferential refrigerant passages 21, further flows toward the opposite axial ends in the axial refrigerant passages 31, and is discharged from the axial refrigerant passages 31 at the axial ends. Fig. 8 illustrates a state in which the ends of the stator-side refrigerant passages 36b at the axial central portion are not provided with the radial refrigerant passage 15 and are closed by the protrusions 20a of the second core 20.

### (1-4) Connection to Fixing Portion:

In the present embodiment, the first core 10, the second core 20, and the third cores 30 according to the above configuration are connected together and fastened to the fixing portion in a state of constituting the stator core 100. That is, the fixing portion is disposed on the lower left side in Figs. 1 and 2, and the stator core 100 and the fixing portion are fastened together by a bolt.

Specifically, the bolt insertion hole 14 of the first core 10, the bolt insertion hole 24 of the second core 20, and the bolt insertion holes 34 of the third cores 30 are holes having the same diameter, and are formed at the same positions of the protrusions 10a, 20a, and 30a. Therefore, in a state where the first core 10 and the second core 20 are in contact with each other and sandwiched between the third cores 30 from the opposite axial sides, the bolt insertion hole 14, the bolt insertion hole 24, and the bolt insertion holes 34 form a hole axially passing through the stator core 100.

The fixing portion is fastened by inserting a bolt 50 from the upper right side in Figs. 1 and 2 into the bolt insertion hole including the bolt insertion hole 14, the bolt insertion hole 24, and the bolt insertion holes 34. That is, the axial length of the bolt 50 is longer than the axial length of the stator core 100, and a threaded portion is formed on an axial distal end of the bolt 50.

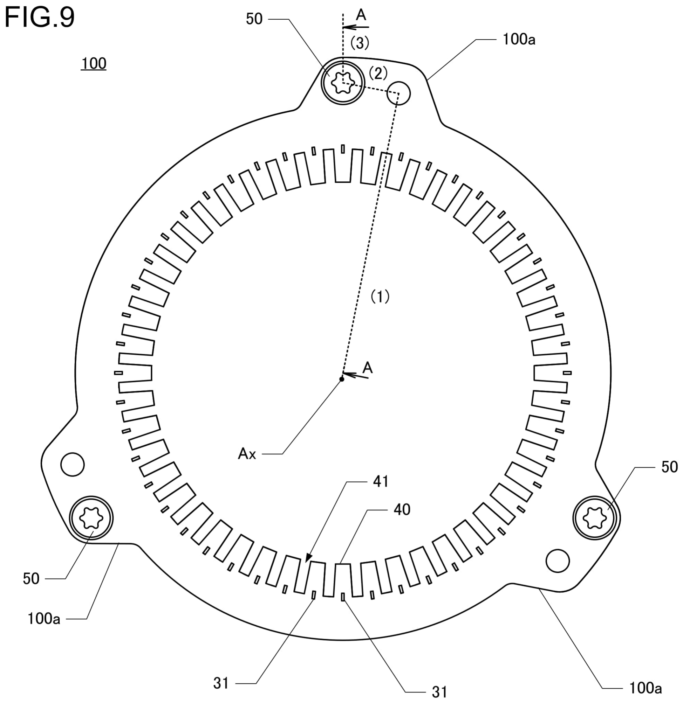

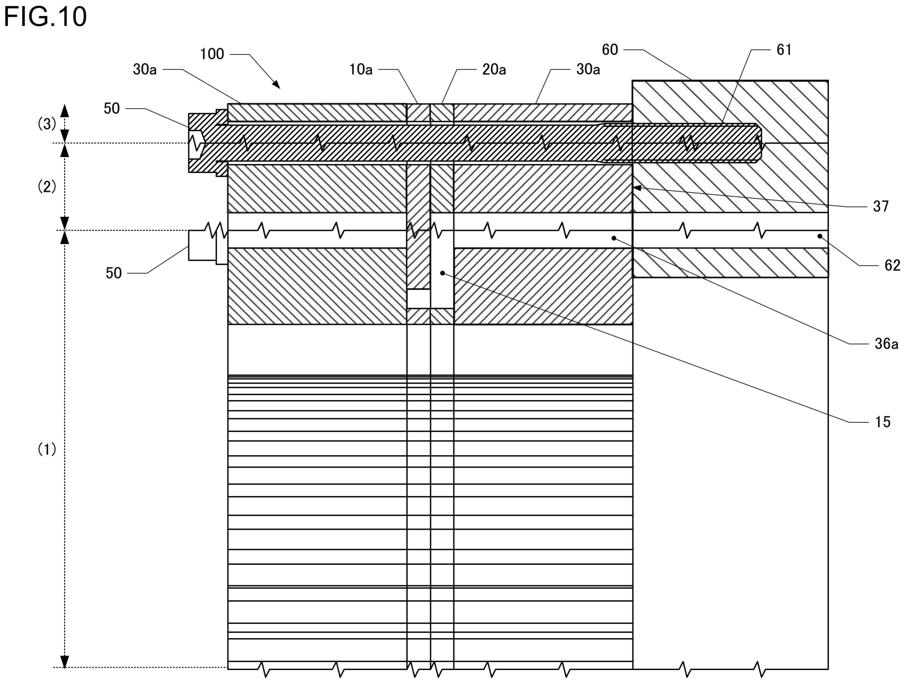

Fig. 9 illustrates a state in which the stator core 100 on the insertion side of the bolt 50 is viewed along the axial direction. As illustrated in Fig. 9, the bolt 50 is inserted into the bolt insertion hole formed in each of the protrusions 100a of the stator core 100. Fig. 10 is a cross-sectional view taken along line II-II illustrated in Fig. 9. The cross-sectional view illustrates a state in which respective ranges (1), (2), and (3) illustrated in Fig. 9 are continuous.

A fixing portion 60 is fastened on the axial distal end side of the bolt 50. The fixing portion 60 is a ring-shaped member, and at least a portion in contact with the protrusions 30a is a flat surface. However, the shape of the fixing portion 60 is not limited as long as the stator core 100 can be fastened thereto. A threaded hole 61 and a fixing-portion-side refrigerant passage 62 are formed in the fixing portion 60. The fixing portion 60 is a part of a housing to which the stator 1 of a rotating electrical machine is fixed. The shape of the housing is not limited, and may be a case that houses the rotating electrical machine, or may be a case that covers at least a part of the rotating electrical machine. Various configurations can be adopted. It is sufficient that the housing is a part or all of a component to which the rotating electrical machine is fixed.

The threaded hole 61 is formed at a position corresponding to the bolt insertion hole 34 of each of the protrusions 30a. That is, the threaded hole 61 is located on an extension line of the bolt insertion hole formed in each of the protrusions 100a of the stator core 100. Thread grooves are formed in the threaded hole 61. The threaded portion at the distal end of the bolt 50 can be inserted into the threaded hole 61. With this configuration, the stator core 100 can be fastened to the fixing portion 60 by inserting the three bolts 50 into the three bolt insertion holes to bring the distal ends of the bolts 50 into a state inserted into the threaded holes 61 of the fixing portion 60 as illustrated in Fig. 9.

The fixing-portion-side refrigerant passage 62 is a circular hole extending in the axial direction, and its cross-sectional shape in the direction perpendicular to the axial direction is the same at any position in the axial direction. That is, the fixing-portion-side refrigerant passage 62 is a hole axially extending with the same hole shape. The shape of the circle is the same as the shape of a circle forming the opening of the stator-side refrigerant passage 36. The fixing-portion-side refrigerant passage 62 is formed at a position corresponding to the stator-side refrigerant passage 36. That is, the fixing-portion-side refrigerant passage 62 is located on an extension line of the stator-side refrigerant passage 36 formed in the protrusion 30a of the third core 30. The refrigerant is supplied from a supply source (not illustrated) to the fixing-portion-side refrigerant passage 62. Therefore, the refrigerant supplied to the fixing-portion-side refrigerant passage 62 reaches the central portion of the stator core 100 through the stator-side refrigerant passage 36a, further passes through the radial refrigerant passage 15, passes through the insides of the first circumferential refrigerant passages 11 and the second circumferential refrigerant passages 21, and passes through the insides of the axial refrigerant passages 31 to cool the stator core 100.

In the present embodiment, a portion where each of the protrusions 30a and the fixing portion 60 are in contact with each other is a flat surface, and the protrusion 30a and the fixing portion 60 are in surface contact with each other. Here, the surface where the protrusion 30a and the fixing portion 60 are in contact with each other is referred to as a contact portion 37. In the present embodiment, the entire surface of the protrusion 30a at the axial end, that is, the entire portion radially protruding from the outer circumference of the stator core 100 serves as the contact portion 37 and is in contact with the fixing portion 60. Therefore, in the present embodiment, both an opening of the bolt insertion hole on the fixing portion 60 side and the opening (supply port) of the stator-side refrigerant passage 36 on the fixing portion 60 side are included in the contact portion 37.

As described above, in the present embodiment, the supply port of the refrigerant, which is the opening of the stator-side refrigerant passage 36 on the fixing portion 60 side, is formed in the protrusion 30a. The stator core 100 is fixed to the fixing portion 60 by the bolt 50 inserted through the bolt insertion hole formed in the protrusion 30a. With this configuration, the possibility that the refrigerant leaks from between the fixing portion 60 and the stator core 100 can be reduced in the present embodiment. When the leakage of the refrigerant is prevented or reduced, a decrease in the refrigerant used for cooling the stator core 100 is prevented or reduced, so that the cooling can be efficiently performed.

That is, when the stator core 100 is fastened to the fixing portion 60 by the bolt 50, a surface pressure by the bolt acts on the contact portion 37 between the stator core 100 and the fixing portion 60, and the stator core 100 and the fixing portion 60 can be brought into strong contact with each other. Therefore, the possibility that the refrigerant leaks from between the fixing portion 60 and the stator core 100 can be reduced. Since the contact at the contact portion 37 is surface contact, the leakage of the refrigerant can be prevented in the entire contact portion 37 as compared with a case where the contact portion 37 is supported by a plurality of point contacts.

Furthermore, in the present embodiment, the supply port corresponding to an opening of the fixing-portion-side refrigerant passage 62 is formed in the contact portion 37 within a distribution range of the surface pressure generated by fastening the bolt 50. That is, in the contact portion 37, the supply port that is the opening of the stator-side refrigerant passage 36 is provided within the distribution range of the surface pressure generated by fastening the bolt 50.

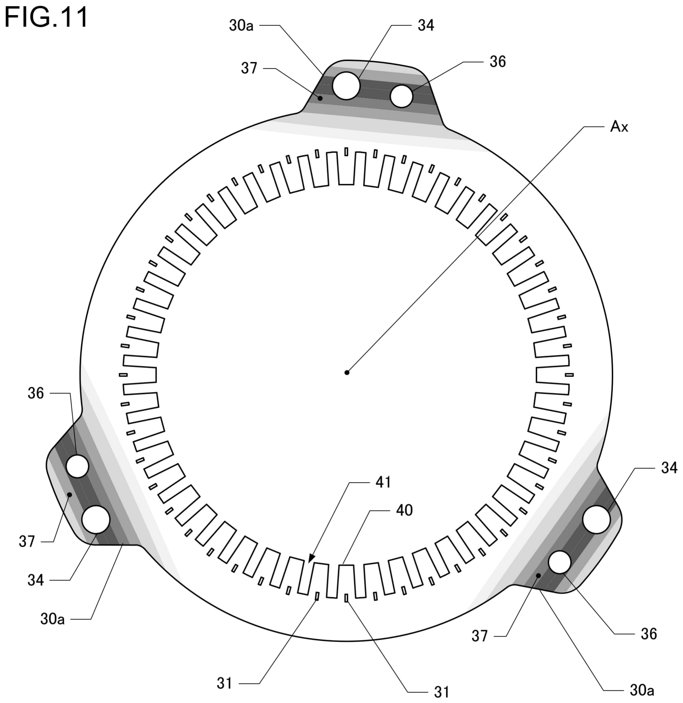

Fig. 11 is a drawing schematically illustrating a simulation result of the surface pressure (MPa) acting on the contact portion 37 and its surrounding area in a case where the stator core 100 is fastened to the fixing portion 60 by the bolt 50. In Fig. 11, the magnitude of the surface pressure is indicated by gray density. A white portion is a portion where the surface pressure can be regarded as 0. As illustrated in Fig. 11, in each of the contact portions 37, the openings of the bolt insertion hole 34 and the stator-side refrigerant passage 36 include a maximum value portion of the surface pressure by the bolt 50, and a maximum surface pressure obtained by the bolt 50 acts thereon. Therefore, the possibility that the refrigerant leaks from between the fixing portion 60 and the stator core 100 can be reduced.

Fig. 11 illustrates that the surface pressure acting on the contact portion 37 by fastening the bolt 50 is not 0. When a range in which the surface pressure is not 0 as described above is defined as the distribution range of the surface pressure, disposing the supply port that is the opening of the stator-side refrigerant passage 36 in the distribution range of the surface pressure can reduce the possibility that the refrigerant leaks from between the fixing portion 60 and the stator core 100. That is, within the range of the contact portion 37 of the protrusion 30a that is a portion where the stator core 100 radially protrudes from the outer circumferential surface of the circular shape, the possibility that the refrigerant leaks from between the fixing portion 60 and the stator core 100 can be reduced.

Furthermore, in the present embodiment, each of the first core 10, the second core 20, and the third core 30 constituting the stator core 100 is formed by axially laminating the electromagnetic steel sheets. In the third core 30, the bolt insertion holes 34, the stator-side refrigerant passages 36, and the protrusions 30a have rotational symmetry with the central axis Ax as the axis of symmetry.

In the example illustrated in Fig. 6, the protrusions 30a are formed at three locations, and the protrusions 30a are formed at positions circumferentially separated by 120° in the rotation direction about the central axis Ax. The protrusions 30a have the same shape, and the bolt insertion holes 34 and the stator-side refrigerant passages 36 formed in the respective protrusions 30a also have the same positions. For example, the positions of lines constituting the outer periphery of the protrusion 30a and a relative positional relationship between the bolt insertion hole 34 and the stator-side refrigerant passage 36 are the same in all the protrusions 30a. Therefore, in the example illustrated in Fig. 6, the symmetry is three-fold rotational symmetry with the central axis Ax as the axis of symmetry. Therefore, in the example illustrated in Fig. 6, in a case where the third core 30 is rotated by 120° with the central axis Ax as the axis of symmetry, the third core 30 before rotation and the third core after rotation coincide with each other. According to the above configuration, the third core 30 can be used in either the posture illustrated in Fig. 6 or the posture rotated by 120° or 240° from the posture illustrated in Fig. 6.

One electromagnetic steel sheet constituting the third core 30 is manufactured, for example, by punching one rolled electromagnetic steel sheet with a die. In the rolled electromagnetic steel sheet, when viewed microscopically, the thickness may vary depending on the position in the width direction of the roll, or the orientation of magnetization may be biased. However, the third core 30 can be manufactured with reduced unevenness of thickness and magnetization by performing rotational lamination in which the electromagnetic steel sheets are laminated while being rotated. Also in the second core 20, rotational lamination can be similarly performed.

### (2) Other Embodiments etc.:

The above embodiment is an example for carrying out the present disclosure, and various other embodiments can be adopted. For example, the axial refrigerant passage 31 is not limited to the configuration formed inside the stator core 100, and a configuration may be adopted in which the refrigerant flows in the slot, that is, the slot also serves as the axial refrigerant passage 31.

The number, size, shape, and the like of the radial refrigerant passage 15, the stator-side refrigerant passage 36, and the protrusion 100a may be different from those in the above-described embodiment. For example, a configuration may be adopted in which the stator-side refrigerant passage 36 is formed in one of the three protrusions 30a. Furthermore, two or more radial refrigerant passages 15 may be formed.

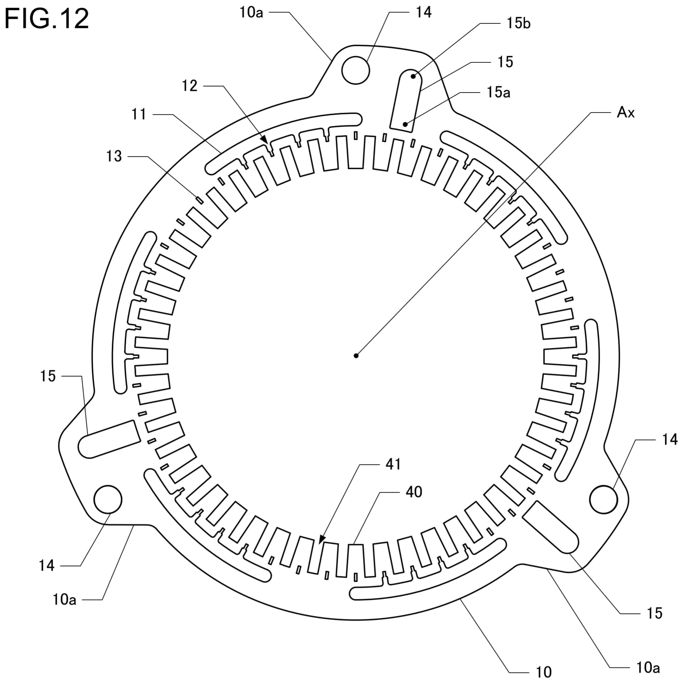

Fig. 12 is a drawing illustrating a configuration example in which the radial refrigerant passages 15 are formed in all the plurality of protrusions 10a included in the first core 10. In Fig. 12, the same components as those illustrated in Fig. 3 are denoted by the same reference numerals. In the first core 10 illustrated in Fig. 12, the radial refrigerant passages 15 are formed in all the plurality of protrusions 10a, and a relative positional relationship between the protrusion 10a and the radial refrigerant passage 15 is the same in all the radial refrigerant passages 15. Therefore, with this configuration, it is possible to manufacture the first core 10 while rotationally laminating the electromagnetic steel sheets.

In this configuration, each of the radial refrigerant passages 15 is provided at a position connected to the stator-side refrigerant passage 36 of the third core 30. Therefore, in the example illustrated in Fig. 12, one of the radial refrigerant passages 15 is connected to the fixing-portion-side refrigerant passage 62 through the stator-side refrigerant passage 36, and at least either the radial refrigerant passage 15 or the stator-side refrigerant passage 36 is closed in the other radial refrigerant passages 15.

For example, in a case where the stator-side refrigerant passage 36a illustrated in Fig. 2 is connected to the fixing-portion-side refrigerant passage 62 of the fixing portion 60, the radial refrigerant passage 15 connected to the stator-side refrigerant passage 36a is not closed. On the other hand, at least either the stator-side refrigerant passage 36b or the radial refrigerant passage 15 corresponding to the stator-side refrigerant passage 36b is closed, so that the refrigerant cannot flow. Various configurations can be adopted for closing the stator-side refrigerant passage 36b and the radial refrigerant passage 15 corresponding to the stator-side refrigerant passage 36b. For example, the stator-side refrigerant passage 36b and the radial refrigerant passage 15 corresponding to the stator-side refrigerant passage 36b may be closed by not providing the fixing-portion-side refrigerant passage 62 in the fixing portion 60, or by fitting any structure in the refrigerant passage. With this configuration, the refrigerant supplied from the fixing-portion-side refrigerant passage 62 to the stator-side refrigerant passage 36a does not leak through the stator-side refrigerant passage 36b. As a result, the stator core 100 can be cooled by causing the refrigerant to flow inside the circumferential refrigerant passage including the first circumferential refrigerant passages 11 and the second circumferential refrigerant passages 21, and the axial refrigerant passages 31.

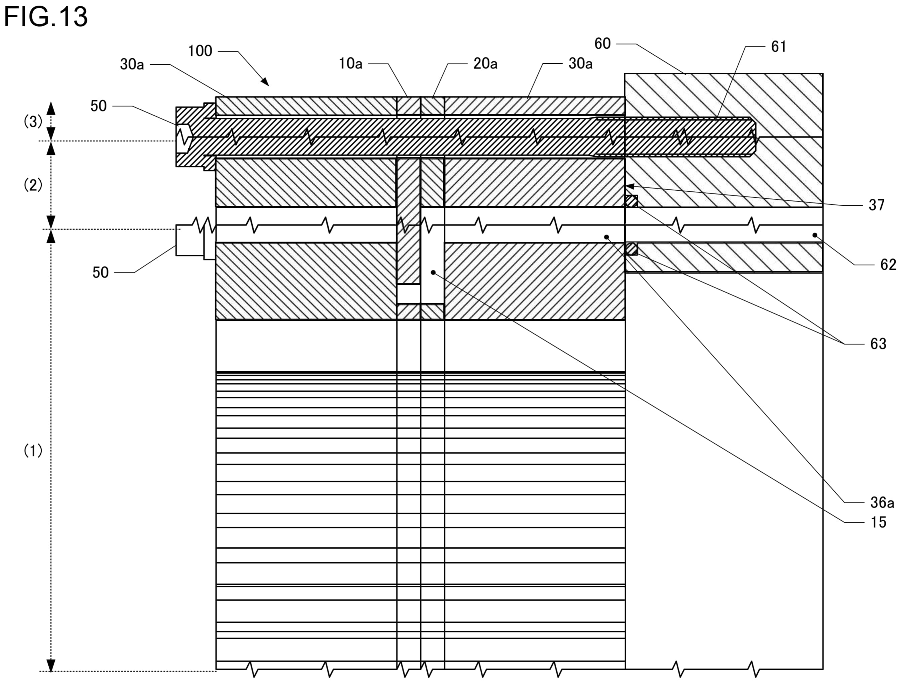

Furthermore, the contact portion 37 may have a configuration for preventing the leakage of the refrigerant. For example, a configuration may be adopted in which a sealing member 63 is disposed to surround the opening of the fixing-portion-side refrigerant passage 62 and the supply port that is the opening of the stator-side refrigerant passage 36. In Fig. 13, in the contact portion 37, a recess in which the ring-shaped sealing member 63 is disposed is formed in the fixing portion 60. That is, in the fixing portion 60, the diameter of the opening of the fixing-portion-side refrigerant passage 62 is larger than the other portion. The portion having a larger diameter than the other portion has a constant depth in the axial direction.

The sealing member 63 is disposed in the recess. The protrusion 30a is brought into contact with the fixing portion 60 by the bolt 50, and the stator core 100 is fastened to the fixing portion 60, so that the sealing member 63 is pushed by the contact portion 37 to be slightly deformed to seal the contact portion 37. With this configuration, the possibility that the refrigerant supplied from the fixing-portion-side refrigerant passage 62 to the stator-side refrigerant passage 36a leaks through the stator-side refrigerant passage 36b can be further reduced.

The stator is fixed to the fixing portion in which the threaded hole and the fixing-portion-side refrigerant passage that is the refrigerant flow passage are formed. That is, the threaded hole for fixing the stator by the bolt and the fixing-portion-side refrigerant passage for supplying the refrigerant to the stator to flow in the stator are formed in the fixing portion. It is sufficient that the threaded hole is provided on the extension line of the bolt insertion hole, and that the stator is fastened to the fixing portion by inserting the bolt inserted into the bolt insertion hole into the threaded hole. It is sufficient that the fixing-portion-side refrigerant passage is configured to supply the refrigerant passing through the fixing-portion-side refrigerant passage from the supply port to the stator.

It is sufficient that the stator core includes the bolt insertion hole axially passing through the stator. The stator core is typically a ring-shaped member and includes the plurality of teeth. The number, size, and the like of the teeth are not limited as long as the teeth are portions where the coils are wound or disposed. Although the stator core has a ring shape, the shape of the ring, for example, the shape of the outer circumference, the inner circumference, or the like is not limited. For example, the outer circumference may have a polygonal shape. It is sufficient that the bolt insertion hole is configured such that the bolt can be inserted from one opening and the distal end of the bolt protruding from the other opening can be inserted into the threaded hole of the fixing portion.

It is sufficient that the bolt is a component that is inserted into the bolt insertion hole and has the distal end inserted into the threaded hole to fix the contact portion including the opening of the bolt insertion hole on the fixing portion side in surface contact with the fixing portion. That is, in the stator, a predetermined region including the opening of the bolt insertion hole on the fixing portion side serves as the contact portion, and the contact portion is fixed in contact with the fixing portion. It is sufficient that the contact portion is a region including the opening of the bolt insertion hole on the fixing portion side and the supply port, and is a region where the stator and the fixing portion are in surface contact with each other. That is, it is sufficient that the stator and the fixing portion are brought into close surface contact with each other by the surface pressure acting on the contact portion, and sealing is performed so as to prevent the leakage of the refrigerant between the supply port of the stator and the fixing-portion-side refrigerant passage of the fixing portion.

The distribution range of the surface pressure is a range where sealing is performed so as to prevent the leakage of the refrigerant between the supply port of the stator and the fixing-portion-side refrigerant passage of the fixing portion. It is sufficient that the distribution range of the surface pressure is specified in advance. That is, it is sufficient that a range in which the surface pressure is equal to or higher than a predetermined threshold is adopted as the distribution range of the surface pressure, and the distribution range is defined so as to be able to prevent the leakage of the refrigerant between the supply port and the fixing-portion-side refrigerant passage with the supply port provided within the distribution range.

It is sufficient that the stator-side refrigerant passage formed in the stator core is the refrigerant flow passage axially extending from the supply port. That is, it is sufficient that the stator-side refrigerant passage extends in the same direction as the bolt insertion hole in a state where the supply port is provided on the extension line of the fixing-portion-side refrigerant passage and the stator-side refrigerant passage is formed continuously from the supply port. The end of the stator-side refrigerant passage opposite to the supply port may be connected to a refrigerant passage having any shape and direction. That is, any refrigerant passage may be connected to the stator-side refrigerant passage such that the refrigerant can cool a desired portion of the stator core 100 after the stator-side refrigerant passage.

It is sufficient that the protrusion is a portion protruding radially outward from the stator, and is a portion where the bolt insertion hole axially passing through the stator and the stator-side refrigerant passage that is the refrigerant flow passage axially extending from the supply port corresponding to the opening of the fixing-portion-side refrigerant passage are formed. That is, the protrusion is a portion directly fastened to the fixing portion by the bolt inserted into the bolt insertion hole, and the stator-side refrigerant passage is formed in this portion. With this configuration, it is sufficient that the protrusion and the fixing portion are fastened together by the bolt, and sealing is performed so as to prevent the leakage of the refrigerant between the supply port of the stator and the fixing-portion-side refrigerant passage of the fixing portion by the fastening force.

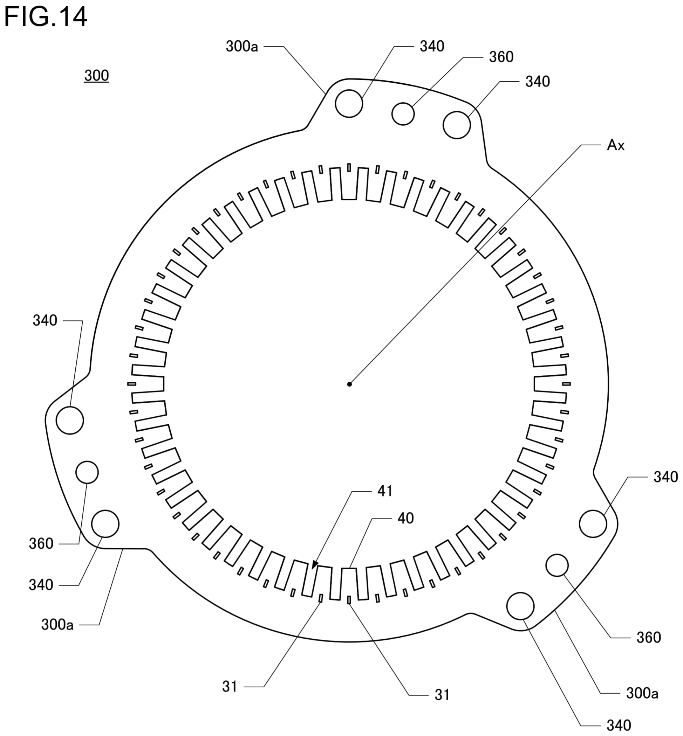

Furthermore, a plurality of the bolt insertion holes may be formed in one protrusion. Fig. 14 is a drawing illustrating an example of a third core 300 in a configuration example in which two bolt insertion holes are formed in one protrusion and the stator-side refrigerant passage is sandwiched between the two bolt insertion holes in the circumferential direction. In Fig. 14, the same components as those of the third core 30 illustrated in Fig. 6 are denoted by the same reference numerals. The third core 300 is used together with the first core 10 illustrated in Fig. 3 and the second core 20 illustrated in Fig. 4. However, in the first core 10 and the second core 20, various configurations may be different according to the shape of the third core 300. For example, the shapes of the protrusions 10a and 20a may be similar to the shape of a protrusion 300a in the third core 300, and the position, the number, and the like of the bolt insertion holes may be changed in accordance with the position, the number, and the like in the third core 300.

Here, the configuration of the third core 300 illustrated in Fig. 14 will be described. The third core 300 is formed by laminating electromagnetic steel sheets having a constant thickness. Fig. 14 is a drawing illustrating the electromagnetic steel sheets constituting the third core 300 as viewed along the direction parallel to the central axis Ax. Two bolt insertion holes 340 are formed in each of the protrusions 300a. Each of the bolt insertion holes 340 constitutes a part of the bolt insertion hole axially passing through the stator 1. The bolt insertion hole 340 is a circular hole and passes through the third core 300. Thread grooves may or may not be formed in the bolt insertion hole 340. The two bolt insertion holes 340 are formed in each of the protrusions 300a of the third core 300 illustrated in Fig. 14. In the first core 10 and the second core 20, bolt insertion holes having the same diameter are axially formed at positions corresponding to the bolt insertion holes 340 to axially pass through the stator 1.

A stator-side refrigerant passage 360, which is an axially-extending refrigerant flow passage, is formed in each of the protrusions 300a. In the present embodiment, the stator-side refrigerant passages 360 are formed in all the three protrusions 300a. An opening that opens at an end opposite to the first core 10 in the axial direction serves as a supply port of the refrigerant. The supply port that is the opening of the stator-side refrigerant passage 360 is connected to the fixing-portion-side refrigerant passage 62 of the fixing portion 60, and the refrigerant is supplied from the fixing-portion-side refrigerant passage 62, to form the refrigerant flow passage. In the present embodiment, the stator-side refrigerant passage 360 is sandwiched between the bolt insertion holes 340 in the circumferential direction. That is, in the example illustrated in Fig. 14, the two bolt insertion holes 340 are formed in one protrusion 300a, and the stator-side refrigerant passage 360 is sandwiched between the two bolt insertion holes 340 in the circumferential direction.

In the above configuration, the bolt 50 is inserted into each of the bolt insertion holes 340 of the third core 300, passes through the first core 10, the second core 20, and the third cores 300, and is inserted into the threaded hole 61 formed in the fixing portion 60. That is, in the fixing portion 60, the threaded holes 61 are formed at two positions corresponding to the bolt insertion holes 340, and the fixing-portion-side refrigerant passage 62 is sandwiched between the two threaded holes 61 in the circumferential direction. Therefore, the fixing-portion-side refrigerant passage 62 and the stator-side refrigerant passage 360 are sandwiched between the two bolts 50. As a result, a sufficiently large force is applied between the fixing-portion-side refrigerant passage 62 and the stator-side refrigerant passage 360 at the contact portion 37 that is a surface where the protrusion 300a and the fixing portion 60 are in contact with each other, and the possibility that the refrigerant leaks from between the fixing portion 60 and the stator core 100 can be reduced.

Also in the present embodiment, among the stator-side refrigerant passages 360 formed in the three protrusions 300a, the stator-side refrigerant passages 360 to which the fixing-portion-side refrigerant passage 62 is not connected do not serve as the refrigerant flow passage. In the present embodiment, the radial refrigerant passage 15 is formed in one of the protrusions 10a of the first core 10, and the holes 16, instead of the radial refrigerant passage 15, are formed in the other two protrusions 10a. Furthermore, in the protrusions 20a of the second core 20, no hole is formed at the positions corresponding to the stator-side refrigerant passages 360 and the holes 16. Therefore, among the stator-side refrigerant passages 360, the stator-side refrigerant passage (36a in Fig. 2) corresponding to the position where the radial refrigerant passage 15 is formed is connected to the second circumferential refrigerant passage 21 through the radial refrigerant passage 15. On the other hand, the stator-side refrigerant passages (36b in Fig. 2) corresponding to the positions where the radial refrigerant passage 15 is not formed are not connected to the second circumferential refrigerant passages 21 nor the first circumferential refrigerant passages 11. Of course, in the first core 10 and the second core 20, the configurations of the protrusions 10a and 20a are determined according to the configuration of the protrusion 300a of the third core 300. For example, in the first core 10, the radial refrigerant passage 15 or the hole 16 is sandwiched between the two bolt insertion holes 14 in the circumferential direction. In the second core 20, no hole is formed between the two bolt insertion holes 24.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A rotating electrical machine comprising:
a housing including a fixing portion (60) in which a threaded hole (61) and a fixing-portion-side refrigerant passage (62) that is a refrigerant flow passage are formed; and
a stator (1) having a ring shape and fixed to the fixing portion (60), the stator (1) including
a stator core (100) in which a bolt insertion hole (14, 24, 34) is formed that axially passes through the stator (1), and
a bolt (50) configured to fix a contact portion (37) including an opening of the bolt insertion hole (14, 24, 34) on the fixing portion (60) side in surface contact with the fixing portion (60) by being inserted into the bolt insertion hole (14, 24, 34) to insert a distal end of the bolt (50) into the threaded hole (61), wherein
a supply port corresponding to an opening of the fixing-portion-side refrigerant passage (62) is formed in the contact portion (37) within a distribution range of a surface pressure generated by fastening the bolt (50), and
a stator-side refrigerant passage (36) that is a refrigerant flow passage axially extending from the supply port is formed in the stator core (100).

2. A rotating electrical machine comprising:
a housing including a fixing portion (60) in which a threaded hole (61) and a fixing-portion-side refrigerant passage (62) that is a refrigerant flow passage are formed; and
a stator (1) having a ring shape and fixed to the fixing portion (60), the stator (1) including
a stator core (100) including a protrusion (100a) protruding radially outward from the stator (1), and in which a bolt insertion hole (14, 24, 34) that axially passes through the stator (1) and a stator-side refrigerant passage (36) that is a refrigerant flow passage axially extending from a supply port corresponding to an opening of the fixing-portion-side refrigerant passage (62) are formed in the protrusion (100a), and
a bolt (50) configured to fix a contact portion (37) including an opening of the bolt insertion hole (14, 24, 34) on the fixing portion (60) side and the supply port in surface contact with the fixing portion (60) by being inserted into the bolt insertion hole (14, 24, 34) to insert a distal end of the bolt (50) into the threaded hole (61).

3. The rotating electrical machine according to Claim 2, wherein
the stator core (100) is formed by axially laminating electromagnetic steel sheets,
the electromagnetic steel sheets include a plurality of the protrusions (100a), and
the bolt insertion hole (14, 24, 34) and the stator-side refrigerant passage (36) formed in each of the protrusions (100a), and the protrusion (100a) have rotational symmetry with an axis of the stator (1) as an axis of symmetry.

4. The rotating electrical machine according to any one of Claims 1 to 3, wherein
the stator core (100) includes:
a circumferential refrigerant passage (11, 21) that is a circumferentially-extending refrigerant flow passage; and
a radial refrigerant passage (15) that is a radially-extending refrigerant flow passage, the radial refrigerant passage (15) being connected to the stator-side refrigerant passage (36) and the circumferential refrigerant passage (11, 21) at one location of the stator core (100).

5. The rotating electrical machine according to Claim 2, wherein
the stator core (100) includes:
a plurality of the protrusions (100a);
a circumferential refrigerant passage (11, 21) that is a circumferentially-extending refrigerant flow passage; and
a plurality of radial refrigerant passages (15) that are radially-extending refrigerant flow passages, each of the radial refrigerant passages (15) being connected to the stator-side refrigerant passage (36) and the circumferential refrigerant passage (11, 21),
one of the radial refrigerant passages (15) is connected to the fixing-portion-side refrigerant passage (62) through the stator-side refrigerant passage (36), and
at least either the radial refrigerant passage (15) or the stator-side refrigerant passage (36) is closed in the other radial refrigerant passage (15).

6. The rotating electrical machine according to any one of Claims 1 to 5, wherein
a sealing member (63) surrounding the opening of the fixing-portion-side refrigerant passage (62) and the supply port is disposed in the contact portion (37).

7. The rotating electrical machine according to any one of Claims 1 to 6, wherein
two of the threaded holes (61) are formed in the fixing portion (60), the fixing-portion-side refrigerant passage (62) is sandwiched between the two threaded holes (61) in a circumferential direction, and
two of the bolt insertion holes (14, 24, 340) respectively corresponding to the two threaded holes (61) are formed in the stator core (100).
